# EUROPÄISCHE PATENTANMELDUNG

(11) **EP 3 293 393 A1**
(43) Veröffentlichungstag der Anmeldung: **14.03.2018**
(21) Anmeldenummer: 17189151.8
(22) Anmeldetag: 04.09.2017
(51) Int. Cl.: F03D 80/50, B66C 1/10

(54) **VORRICHTUNG UND VERFAHREN ZUM AUSTAUSCH VON AUSTAUSCHBAREN KOMPONENTEN EINER WINDENERGIEANLAGE**

(30) Priorität: 12.09.2016 DE 102016010891
(71) Anmelder: Senvion GmbH, 22297 Hamburg (DE)
(72) Erfinder: Harries, Alexander, 49078 Osnabrück (DE); Kelm, Andreas, 24146 Kiel (DE)
(74) Vertreter: Glawe, Delfs, Moll

(57) **Zusammenfassung**

Die Erfindung betrifft eine Vorrichtung (1) und ein Verfahren zum Austausch von austauschbaren Komponenten einer Windenergieanlage.

Die erfindungsgemäße Vorrichtung (1) umfasst:
- einen Aufnahmekorb (10) zur Aufnahme wenigstens einer austauschbaren Komponente mit einem ebenen Boden (11) und einer umlaufenden Seitenwand (12), wobei in der Seitenwand (12) eine Einschuböffnung (13) vorgesehen ist, durch die eine austauschbaren Komponente barrierefrei in horizontaler Richtung auf den Boden (11) des Aufnahmekorbs (10) oder von dem Boden (11) des Aufnahmekorbs (10) weg geschoben werden kann;
- eine an dem Aufnahmekorb (10) angeordnete Befestigungsvorrichtung (20) für die seitliche Befestigung des Aufnahmekorbes (10) zur wahlweisen Fixierung der Lage der Einschuböffnung (13) des Aufnahmekorbs (10) gegenüber einer Komponentenaufnahme der Windenergieanlage; und
- eine Aufhängung (30) zum Aufhängen des Aufnahmekorbs (10).

Das erfindungsgemäße Verfahren betrifft die Nutzung der erfindungsgemäßen Vorrichtung.

## Beschreibung

Die Erfindung betrifft eine Vorrichtung und ein Verfahren zum Austausch von austauschbaren Komponenten einer Windenergieanlage.

In Windenergieanlagen sind häufig austauschbare Komponenten vorgesehen, die in regelmäßigen Abständen gewartet und/oder ausgetauscht werden müssen. Ein Beispiel für entsprechende austauschbare Komponenten sind die Batterien für die unterbrechungsfreie Stromversorgung (USV).

Die Batterien für die unterbrechungsfreie Stromversorgung in Windenergieanlagen müssen in regelmäßigen Abständen ausgetauscht werden. Da die Batterien im Regelfall in einem Schaltschrank oberhalb der Eingangsebene der Windenergieanlage angeordnet sind, müssen die Batterien grundsätzlich von der Eingangsebene der Windenergieanlage bis auf die Ebene des Schaltschranks bzw. umgekehrt transportiert werden. Aufgrund der in den letzten Jahren gestiegenen Anforderungen an die unterbrechungsfreie Stromversorgung von Windenergieanalgen weisen die dafür erforderlichen Batterien häufig ein Eigengewicht von bis zu ca. 70 kg pro Stück auf.

Aus Gründen der Sicherheit und des Gesundheitsschutzes, die sich bspw. in Grundsätzen zur Gesundheit, Arbeitssicherheit und Umweltschutz (HSE) wiederfinden, ist die maximal von einer einzelnen Person zu hebende Last begrenzt. So schreibt z.B. eine übliche Gefährdungsabschätzung gemäß der Verordnung über Sicherheit und Gesundheitsschutz bei der manuellen Handhabung von Lasten bei der Arbeit (Lastenhandhabungsverordnung) eine maximal von Monteuren zu tragende Last von 25 kg vor, die sich im Falle von mehreren Wiederholungen noch weiter reduzieren kann. Ein rein händischer Austausch einer typischen Batterie einer unterbrechungsfreien Stromversorgung einer Windenergieanlage scheidet demnach aus.

Eine im Stand der Technik praktizierte Lösung zum Austausch von Batterien der unterbrechungsfreien Stromversorgung von Windenergieanlagen umfasst die Verwendung eines Scherenhubwagens. Dabei wird der Scherenhubwagen so vor dem Schaltschrank der unterbrechungsfreien Stromversorgung angeordnet und in der Höhe eingestellt, dass die Batterien der unterbrechungsfreien Stromversorgung aus ihrer jeweiligen Aufnahme im Schaltschrank auf den Scherenhubwagen gezogen werden können. Entsprechend wird zum Einsetzen von Batterien vorgegangen.

Der letztendliche Transport der Batterien von der Eingangsebene zum Schaltschrank bzw. andersherum erfolgt häufig über einen Kran. Dazu müssen die Batterien jedoch wieder händisch von dem Scherenhubtisch in einen Krankorb o.ä. bzw. umgekehrt gehoben werden. Auch wenn der zu überbrückende Weg dabei kurz sein mag, ist Entsprechendes mit den erwähnten Grundsätzen zur Gesundheit, Arbeitssicherheit und Umweltschutz regelmäßig dennoch nicht vereinbar.

Mit der Verwendung eines Scherenhubwagens in einer Windenergieanlage zum Austausch von USV-Batterien sind noch weitere Nachteile verbunden. Zum einen ist der Scherenhubwagen vor Benutzung zunächst in die Windenergieanlage zu befördern. Dazu ist grundsätzlich ein ausreichend dimensionierter Zugang in der Windenergieanlage und zum Verwendungsort erforderlich.

Auch sind geeignete Hebevorrichtungen erforderlich, die das häufig nicht unerhebliche Gewicht eines Scherenhubwagens heben können müssen. Schlussendlich muss am Verwendungsort der Boden das Gewicht des Scherenhubwagens zusammen mit darauf angeordneten USV-Batterien tragen können und außerdem ausreichend freien Platz bieten, um mit dem Scherenhubwagen tatsächlich arbeiten zu können.

Häufig sind in Windenergieanlagen die Voraussetzungen für die Verwendung eines Scherenhubwagens zum Austausch USV-Batterien nicht gegeben. Doch auch wenn diese gegeben sein sollten, ist der Austausch von Batterien der unterbrechungsfreien Stromversorgung mit Scherenhubwagen aufwendig und zeitintensiv, was sich letztendlich auch in hohen Kosten für eine entsprechende Wartung niederschlägt.

Aufgabe der vorliegenden Erfindung ist es, eine Vorrichtung und ein Verfahren zum Austausch von austauschbaren Komponenten einer Windenergieanlage, wie bspw. USV-Batterien, zu schaffen, bei denen die Nachteile aus dem Stand der Technik nicht mehr oder zumindest nur noch in vermindertem Maße auftreten.

Gelöst wird diese Aufgabe durch eine Vorrichtung gemäß dem Hauptanspruch sowie einem Verfahren gemäß dem nebengeordneten Anspruch 11. Vorteilhafte Weiterbildungen sind Gegenstand der abhängigen Ansprüche.

Demnach betrifft die Erfindung eine Vorrichtung zum Austausch von austauschbaren Komponenten einer Windenergieanlage umfassend:
- einen Aufnahmekorb zur Aufnahme wenigstens einer austauschbaren Komponente mit einem ebenen Boden und einer umlaufenden Seitenwand, wobei in der Seitenwand eine Einschuböffnung vorgesehen ist, durch die eine austauschbaren Komponente barrierefrei in horizontaler Richtung auf den Boden des Aufnahmekorbs oder von dem Boden des Aufnahmekorbs weggeschoben werden kann;
- eine an dem Aufnahmekorb angeordnete Befestigungsvorrichtung zur seitlichen Befestigung des Aufnahmekorbes zur wahlweisen Fixierung der Lage der Einschuböffnung des Aufnahmekorbs gegenüber einer Komponentenaufnahme der Windenergieanlage; und
- eine Aufhängung zum Aufhängen des Aufnahmekorbs.

Weiterhin betrifft die Erfindung ein Verfahren zum Austausch von austauschbaren Komponenten einer Windenergieanlage mit einer erfindungsgemäßen Vorrichtung, umfassend die Schritte:
a) Heranbewegen des Aufnahmekorbs zur Aufnahme wenigstens einer austauschbaren Komponente an eine Komponentenaufnahme der Windenergieanlage;
b) Fixieren der Lage der Einschuböffnung des Aufnahmekorbs gegenüber der Komponentenaufnahme mit der Befestigungsvorrichtung;
c) Schieben wenigstens einer austauschbaren Komponenten aus der Komponentenaufnahme auf den Aufnahmekorb und/oder von dem Aufnahmekorb in die Komponentenaufnahme;
d) Lösen der Befestigungsvorrichtung; und
e) Wegbewegen des Aufnahmekorbs von der Komponentenaufnahme.

Zunächst werden einige in Zusammenhang mit der Erfindung verwendete Begriff erläutert.
Das Schieben einer Komponente gilt als "barrierefrei", wenn abgesehen von der unmittelbaren Reibungskraft zwischen Komponente und der Fläche, auf der diese geschoben wird, keine weiteren Widerstände auftreten. Bspw. ist die zum Schieben vorgesehene Fläche vorzugsweise derart eben, sodass die zu schiebene Komponente nicht an einer Stufe oder Kante auf der Schiebefläche hängen bleiben kann.

Der Begriff "USV-Batterie" steht synonym für eine Batterie für die unterbrechungsfreie Stromversorgung.

Mit der erfindungsgemäßen Vorrichtung ist es möglich, auch solche Komponenten einer Windenergieanlage auszutauschen, deren manueller Austausch unter Berücksichtigung der Grundsätze zur Gesundheit, Arbeitssicherheit und Umweltschutz (HSE) nicht möglich wäre, wie bspw. USV-Batterien. Gleichzeitig können die Anforderung an die Ausgestaltung bspw. der Gondel einer Windenergieanlage und/oder des Zugangs dazu im Vergleich zu einem Austausch entsprechender Komponenten mit einem Scherenhubwagen gering gehalten werden.

Die erfindungsgemäße Vorrichtung umfasst dazu eine über eine Aufhängung aufhängbare Aufnahmevorrichtung für die auszutauschenden Komponenten, die gleichzeitig seitlich an einer Komponentenaufnahme der Windenergieanlage befestigten lässt. Indem die erfindungsgemäße Aufnahmevorrichtung zum Aufhängen ausgebildet ist, ist eine besondere Ausgestaltung des Bodens innerhalb der Windenergieanlagen zur Verwendung der Aufnahmevorrichtung nicht erforderlich. Vielmehr ist es ausreichend, wenn in der Windenergieanlage eine Aufhängungsmöglichkeit für die Aufnahmevorrichtung gegeben ist, die das Gewicht der erfindungsgemäßen Vorrichtung mit darauf befindlichen austauschbaren Komponenten tragen kann. Bei der Aufhängungsmöglichkeit kann es sich bspw. um einen Aufhängungspunkt an der Struktur der Windenergieanlage bzw. der Gondel oder um einen dafür an entsprechender Stelle angeordneten Kran handeln.

Über die vorgesehene Befestigungsvorrichtung lässt sich der Aufnahmekorb gegenüber der Komponentenaufnahme der Windenergieanlage, aus der die auszutauschenden Komponenten entnommen und anschließend Ersatzkomponenten eingesetzt werden sollen, fixieren. Dies ist für die Schritte des Entnehmens und Einsetzen von Komponenten aus bzw. in eine entsprechende Komponentenaufnahme besonders hilfreich, da sich der Aufnahmekorb allein durch seine Aufhängung regelmäßig nicht ortsfest gegenüber der Komponentenaufnahme positionieren lässt. Insbesondere da erfindungsgemäß vorgesehen ist, dass die auszutauschenden Komponenten durch Schieben in den Aufnahmekorb gelangen sollen, ist eine ortsfeste Positionierung des Aufnahmekorbs gegenüber der Komponentenaufnahme aber wünschenswert.

Die Befestigungsvorrichtung kann eine Öffnung zur Durchführung eines - bspw. an der Komponentenaufnahme vorgesehenen - Befestigungselementes und/oder ein - bspw. durch eine entsprechende Öffnung hindurchgeführtes - Befestigungselement umfassen. Umfasst die Befestigungsvorrichtung ein Befestigungselement, ist dieses vorzugsweise verliersicher an der Befestigungsvorrichtung angeordnet. So kann das Befestigungselement derart ausgestaltet sein, dass es sich zwar in einer Öffnung zur Durchführung des Befestigungselementes drehen, nicht aber in axialer Richtung verschieben lässt. Dies lässt sich bspw. durch Rastelemente realisieren. Alternativ kann auch ein Sicherungsseil vorgesehen sein, wobei das eine Ende des Sicherungsseils mit dem Befestigungselement, das andere Ende mit dem Aufnahmekorb verbunden ist. Das Befestigungselement kann ein Schraubengewinde zur lösbaren Verbindung mit einem geeigneten Gegenstück aufweisen. Besonders bevorzugt ist es aber, wenn das Befestigungselement als Teil eines Schnellverschlusses, bspw. eines Bajonettverschlusses ausgebildet ist, welches mit einem geeigneten anderen Teil im Bereich der Komponentenaufnahme der Windenergieanlage zusammenwirken kann, um die gewünschte wahlweise Fixierung zu erreichen.

Die Befestigungsvorrichtung kann auch einen Vorsprung zum Einhaken an der Komponentenaufnahme umfassen. Insbesondere kann der Haken so ausgestaltet sein, dass ein Absenken des Aufnahmekorbs mit der Befestigungsvorrichtung unmittelbar vor der Komponentenaufnahme das Einhaken und ein Anheben des Ausnahmekorbs ein Aushaken ermöglicht. Dazu kann der Haken bspw. im Bereich der Einschuböffnung angeordnet sein und die Komponentenaufnahme eine Öse zum Eingriff des Hakenelementes aufweisen.

Ist der Aufnahmekorb durch die Befestigungsvorrichtung mit seiner Einschuböffnung gegenüber der Komponentenaufnahme fixiert, lassen sich die auszutauschenden Komponenten durch die Einschuböffnung einfach von der Komponentenaufnahme in den Aufnahmekorb ziehen. Da der Aufnahmekorb derart ausgebildet ist, dass ein barrierefreies Schieben der Komponente über den Boden des Aufnahmekorbs gewährleistet ist, muss ein Monteur beim Schieben der Komponente im Wesentlichen nur die Reibungskraft, welche die Komponenten gegenüber dem Boden hat, überwinden. Grundsätzlich ist die dafür vom Monteur aufzubringende Kraft ohne weiteres mit den Grundsätzen zur Gesundheit, Arbeitssicherheit und Umweltschutz (HSE) vereinbar.

Um zu verhindern, dass in dem Aufnahmekorb befindliche Komponenten von diesem Herunterfallen, weist der Aufnahmekorb abseits der Einschuböffnung eine umlaufende Seitenwand auf. Die Höhe der Seitenwand kann an die Komponenten, für die ein Aufnahmekorb vorgesehenen ist, derart angepasst sein, dass sowohl ein ungewolltes Herunterrutschen als auch ein ungewolltes Herunterkippen vermieden wird. Es ist dabei nicht erforderlich, dass die Seitenwand durchgehend ist. Vielmehr ist es bereits ausreichend, wenn mögliche Unterbrechungen der Seitenwand derart dimensioniert sind, dass keine in dem Aufnahmekorb befindliche Komponente durch eine solche Unterbrechung aus dem Aufnahmekorb gelangen kann.

Damit auch ein Herunterrutschen oder Herunterkippen von Komponenten im Bereich der Einschuböffnung verhindert werden kann, ist bevorzugt ein Sicherungselement zum Sichern von im Aufnahmekorb befindlichen austauschbaren Komponenten gegen ein Herausrutschen aus der Einschuböffnung vorzusehen. Das Sicherungselement kann dabei bspw. eine sich über die Einschuböffnung erstreckende Absperrkette, eine, vorzugsweise um eine sich parallel zum Boden des Aufnahmekorbs verlaufende Achse verschwenkbare Absperrklappe oder um ein in eine dafür vorgesehene Halterung einschiebbares Sicherungsblech sein.

Ist der Aufnahmekorb grundsätzlich zur gleichzeitigen Aufnahme von mehr als einer austauschbaren Komponente (bspw. drei USV-Batterien) ausgebildet, ist bevorzugt, wenn der Boden des Aufnahmekorbs durch Trennwände in eine der Anzahl der aufzunehmenden austauschbaren Komponenten entsprechende Anzahl Abteile unterteilt ist, die dabei jedoch einseitig offen sind, damit die Komponenten weiterhin barrierefrei in die Abteile geschoben werden können. Die Unterteilung in Abteile bietet den Vorteil, dass wenn ein für die Aufnahme mehrerer austauschbarer Komponenten ausgebildeter Aufnahmekorb nur mit einer einzelnen austauschbaren Komponente beladen werden soll, diese im Aufnahmekorb nicht frei hin und her rutschen kann. Außerdem können die Trennwände zur Bildung der Abteile ein unmittelbares aneinanderschlagen der auszutauschenden Komponenten verhindern. Damit in den Abteilen befindliche Komponenten ausreichend gegen Verrutschen und Kippen gesichert sind, ist bevorzugt, wenn die Grundfläche jedes Abteils vorzugsweise um weniger als 10%, vorzugsweise um weniger als 5% größer ist als die Grundfläche der aufzunehmenden austauschbaren Komponente.

Die erfindungsgemäße Vorrichtung kann einen Ketten- oder Seilzug umfassen, der an dem einen Ende mit der Aufhängung zum Aufhängen des Aufnahmekorbs verbindbar ist und an seinem anderen Ende in der Gondel oder im Turm der Windenergieanlage - bspw. an einem Aufhängungspunkt an der Struktur der Windenergieanlage - befestigbar ist. Die Länge des Ketten- oder Seilzuges ist vorzugsweise ausreichend, um den Aufnahmekorb von der Austauschebene der Windenergieanlage - also der Ebene, auf der der Austausch der Komponenten erfolgt - bis zur Eingangsebene der Windenergieanlage - also der Ebene, auf der die Windenergieanlage betreten werden kann - abzulassen. So können die auszutauschenden Komponenten ohne Umladen aus der Komponentenaufnahme der Windenergieanlage bis zur Eingangsebene der Windenergieanlage (und umgekehrt) transportiert werden.

Alternativ oder zusätzlich kann die erfindungsgemäße Vorrichtung einen in der Windenergieanlage anordenbaren Kran, an dem unmittelbar die Aufhängung zum Aufhängen des Aufnahmekorbs und/oder der Ketten- oder Seilzug der Vorrichtung befestigbar ist. Der Kran ist vorzugsweise schwenkbar, damit auch eine horizontale Bewegung des Aufnahmekorbs innerhalb der Windenergieanlage einfach möglich ist. Der Kran kann weiterhin vorzugweise eine Seillänge aufweisen, die zum Ablassen des Aufnahmekorbs von der Austauschebene der Windenergieanlage zur Eingangsebene der Windenergieanlage ausreicht. Insbesondere in den Fällen, in denen der Aufnahmekorb unmittelbar an dem Kran befestigt ist, können so die auszutauschenden Komponenten ohne Umladen aus der Komponentenaufnahme der Windenergieanlage bis zur Eingangsebene der Windenergieanlage (und umgekehrt) transportiert werden.

Es ist bevorzugt wenn der Aufnahmekorb derart zusammenlegbar ist, dass das von dem Aufnahmekorb eingenommene Volumen im zusammengelegten Zustand kleiner ist als im Verwendungszustand.

Bei der oder den auszutauschenden Komponenten handelt es sich vorzugsweise um Batterien für die unterbrechungsfreie Stromversorgung.

Zur Erläuterung des erfindungsgemäßen Verfahrens wird auf die vorstehenden Ausführungen verwiesen.

Die Erfindung wird nun anhand einer vorteilhaften Ausführungsform unter Bezugnahme auf die beigefügten Zeichnungen beispielhaft beschrieben. Es zeigen:
- Figur 1:: eine schematische Darstellung eines ersten Ausführungsbeispiels einer erfindungsgemäßen Vorrichtung zum Austausch von austauschbaren Komponenten einer Windenergieanlage;
- Figur 2:: eine detailliertere Darstellung der Vorrichtung gemäß Figur 1;
- Figur 3:: eine schematische Darstellung eines zweiten Ausführungsbeispiels einer erfindungsgemäßen Vorrichtung zum Austausch von austauschbaren Komponenten einer Windenergieanlage;
- Figur 4:: eine detailliertere Darstellung der Vorrichtung gemäß Figur 3; und
- Figur 5:: die Verwendung der Vorrichtung aus Figuren 1 und 2 zum Austausch von USV-Batterien einer Windenergieanlage.

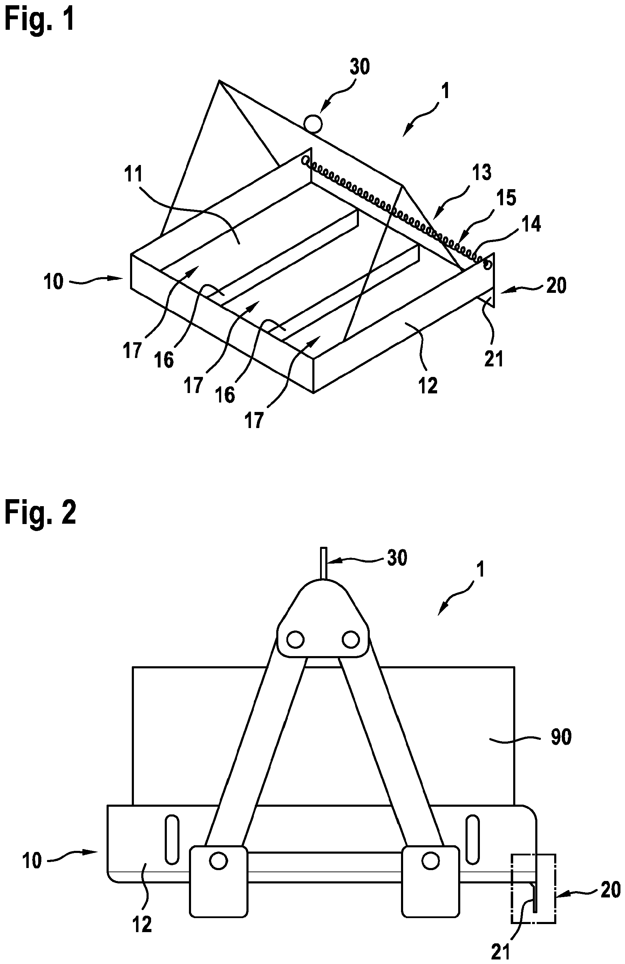

In Figur 1 ist schematisch ein erstes Ausführungsbeispiel einer erfindungsgemäßen Vorrichtung 1 zum Austausch von austauschbaren Komponenten einer Windenergieanlage dargestellt. Die Vorrichtung 1 ist dabei insbesondere zum Austausch der USV-Batterien 90 - also Batterien für die unterbrechungsfreie Stromversorgung einer Windenergieanlage - ausgebildet, wie dies auch in Figur 2 gezeigt ist, in der die Vorrichtung gemäß Figur 1 detaillierter dargestellt ist.

Die Vorrichtung 1 umfasst einen Aufnahmekorb 10 zur Aufnahme von bis zu drei USV-Batterien 90. Dazu weist der Aufnahmekorb 10 einen ebenen Boden 11 und eine umlaufende Seitenwand 12 auf. An einer Seite des Aufnahmekorbs 10 ist in der Seitenwand 12 eine Einschuböffnung 13 vorgesehen. Durch die Einschuböffnung 13 können die USV-Batterien 90 barrierefrei in den Aufnahmekorb 10 eingeschoben oder aus dem Aufnahmekorb 10 herausgeschoben werden.

Um zu verhindern, dass in dem Aufnahmekorb 10 befindliche USV-Batterien 90 ungewollt durch die Einschuböffnung 13 aus dem Aufnahmekorb 10 fallen, ist ein als Absperrkette 14 ausgebildetes Sicherungselement 15 vorgesehen, mit der wahlweise die Einschuböffnung 13 gegen Herausfallen gesichert werden kann.

Der Boden 11 des Aufnahmekorbs 10 ist weiterhin durch zwei Trennwände 16 in drei Abteile 17 unterteilt, wobei jedes Abteil 17 zur Aufnahme jeweils einer USV-Batterie 90 ausgebildet ist. Die Grundfläche eines Abteils 17 ist dabei um ca. 7% größer als die Grundfläche der aufzunehmenden USV-Batterien 90. Dadurch wird einerseits gewährleistet, dass sich die USV-Batterien 90 einfach in die und aus den einzelnen Abteile 17 schieben lassen; andererseits wird sichergestellt, dass in den Abteilen 17 befindliche USV-Batterien 90 nicht ungewollt verrutschen oder kippen können. Auch wird ein Aneinanderschlagen von benachbarten USV-Batterien 90 in dem Aufnahmekorb 10 vermieden.

An dem Aufnahmekorb 10 ist eine Befestigungsvorrichtung 20 vorgesehen, mit welcher der Aufnahmekorb 10 wahlweise gegenüber der Komponentenaufnahme für die USV-Batterien 90 seitens der Windenergieanlage fixiert werden kann. Die Befestigungsvorrichtung 20 umfasst dazu einen, sich der Seite der Einschuböffnung 13 des Aufnahmekorbs 10 entlang erstreckenden Vorsprung 21 zum Einhaken an der Komponentenaufnahme. Dazu kann die Komponentenaufnahme der Windenergieanlage bspw. eine zum Eingriff des Vorsprungs 21 angepasste Öffnung aufweisen. Es kann aber auch ausreichend sein, wenn an der Komponentenaufnahme Hakenelemente vorgesehen sind, die den Vorsprung 21 umgreifen. Zum wahlweisen Fixieren des Aufnahmekorbs 10 muss dieser lediglich von oben in die Öffnung bzw. die Hakenelemente der Komponentenaufnahme eingeführt werden. Zum Lösen ist der Aufnahmekorb 10 nach oben aus der Öffnung bzw. den Hakenelementen wegzubewegen.

Ein entsprechendes Einhängen und Lösen des Aufnahmekorbs 10 bzw. der Befestigungsvorrichtung 20 lässt sich problemlos erreichen, insbesondere da der Aufnahmekorb 10 über die Aufhängung 30 regelmäßig an einem Kran oder einem Ketten- bzw. Seilzug aufgehängt sein wird, über den sich der Aufnahmekorb 10 entsprechend in vertikaler Richtung verfahren lässt.

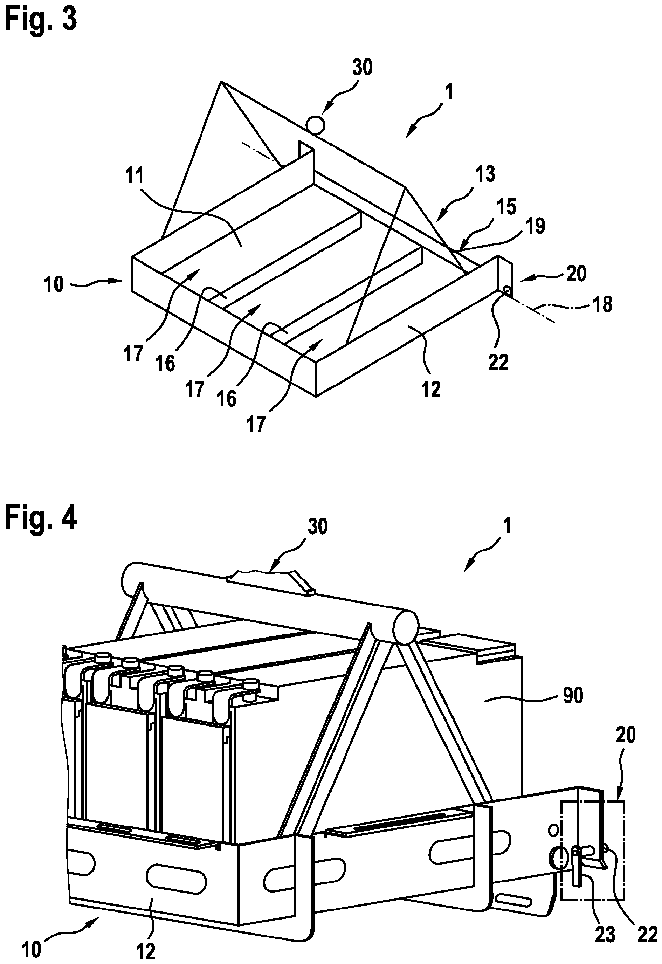

In Figuren 3 und 4 ist ein zweites Ausführungsbeispiel einer erfindungsgemäßen Vorrichtung 1 zum Austausch von austauschbaren Komponenten einer Windenergieanlage dargestellt, wobei Figur 3 die Vorrichtung 1 lediglich schematisch, Figur 4 die Vorrichtung 1 detailliert zeigt.

Das Ausführungsbeispiel gemäß den Figuren 3 und 4 gleicht in weiten Teilen demjenigen aus Figuren 1 und 2, weshalb im Folgenden lediglich auf die Unterschiede zwischen den beiden Ausführungsbeispielen eingegangen wird. Im Übrigen wird auf die vorstehenden Ausführungen zu Figuren 1 und 2 verwiesen.

Bei dem Ausführungsbeispiel gemäß Figuren 3 und 4 ist sowohl das Sicherungselement 15 als auch die Befestigungsvorrichtung 20 abweichend zu dem ersten Ausführungsbeispiel ausgeführt.

Das Sicherungselement 15 umfasst eine um die in Figur 3 angedeutete Achse 18 schwenkbare Absperrklappe 19, die sich von der in Figur 3 gezeigten Stellung zum Sichern der Einschuböffnung 13 derart nach unten verschwenken lässt, dass die Einschuböffnung 13 vollständig frei ist, wie dies in Figur 4 angedeutet ist. Anstelle einer Absperrklappe 19 kann auch ein in eine dafür vorgesehene Halterung einschiebbares Sicherungsblech vorgesehen sein.

Die Befestigungsvorrichtung 20 umfasst eine Öffnung 22 (siehe Figur 3), in die ein Befestigungselement 23 (siehe Figur 4) eingeführt ist. Bei dem Befestigungselement 23 handelt es sich um einen Teil eines Schnellverschlusses, der mit einem entsprechenden Gegenstück an der Komponentenaufnahme der Windenergieanlage zusammenwirken kann, um die Einschuböffnung 13 des Aufnahmekorbs 10 gegenüber der Komponentenaufnahme in einer solchen Position zu fixieren, dass die USV-Batterien einfach und barrierefrei aus der Komponentenaufnahme auf den Aufnahmekorb 10 und umgekehrt geschoben werden können. Das Befestigungselement 23 weist dabei Rastelemente auf, mit denen es weiterhin drehbar, aber gleichzeitig auch verliersicher in der Öffnung befestigt ist.

Eine erfindungsgemäße Vorrichtung 1 zum Austausch von austauschbaren Komponenten einer Windenergieanlage bspw. gemäß den Figuren 1 bis 4 kann noch einen Ketten- bzw. Seilzug 40 oder einen Kran 50 umfassen, der an der Windenergieanlage befestigt wird und an dem die Aufnahmekorb 10 aufgehängt wird. Sofern vorhanden, kann aber selbstverständlich auch auf einen in einer Windenergieanlage bereits vorhanden Kran 50 und/oder Seil- bzw. Kettenzug 40 zurückgegriffen werden.

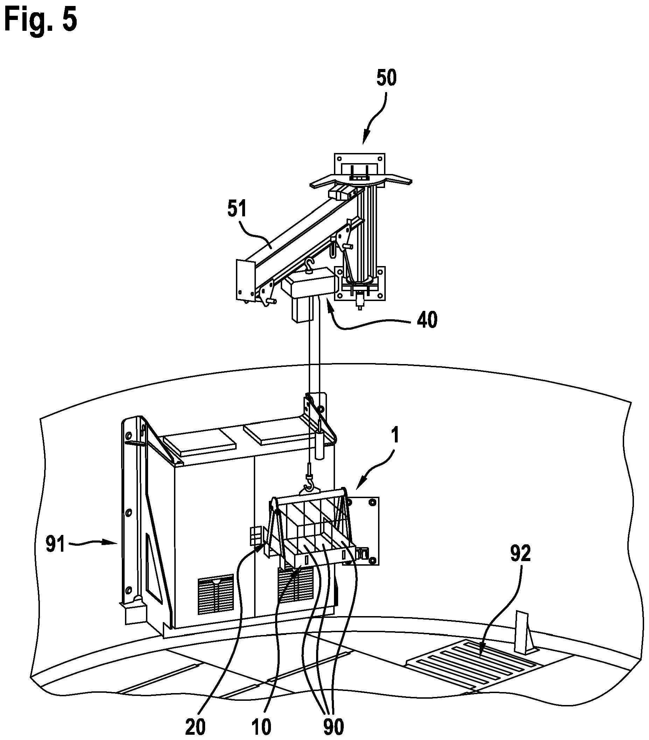

Unabhängig davon, ob Seil- bzw. Kettenzug 40 oder Kran 50 bereits in der Windenergieanlage vorhanden sind, stellt sich die Verwendung einer erfindungsgemäßen Vorrichtung 1 wie in Figur 5 anhand der Vorrichtung 1 gemäß Figuren 1 und 2 skizziert dar.

An einem in horizontaler Ebene schwenkbaren Kran 50 ist ein Seil- bzw. Kettenzug 40 befestigt, an dem wiederum der Aufnahmekorb 10 aufgehängt ist. Da der Seil- bzw. Kettenzug 40 entlang des Kranauslegers 51 verschiebbar ist, kann der Aufnahmekorb 10 über weite Bereiche bewegt werden. Insbesondere kann der Aufnahmekorb 10 vor den Schaltschrank 91, in dem sich die Aufnahme für USV-Batterien 90 befindet, als auch durch die Plattformöffnung 92 verfahren werden. Der Seil- bzw. Ketten zug 40 weist dabei sogar eine geeignete Seillänge auf, dass der Aufnahmekorb 10 durch die Plattformöffnung 92 bis zur Eingangsebene der Windenergieanlage abgesenkt werden kann.

Zum Austausch der USV-Batterien wird zunächst der Schaltschrank 91 geöffnet, bevor der Austauschkorb 10 über den Kran 50 und den Seilzug derart von oben an die Aufnahme der USV-Batterien 90 im Schaltschrank 91 herangefahren wird, dass der Vorsprung 21 der Befestigungsvorrichtung 20 am Austauschkorb 10 in dafür vorgesehene Haltelemente an der Aufnahme der USV-Batterien 90 eingreift. Anschließend können jeweils bis zu drei USV-Batterien 90 barrierefrei aus der Aufnahme in die Abteile 17 des Aufnahmekorbs 10 gezogen werden. Ist dies erfolgt, wird die Absperrkette 14 oder eine Absperrklappe 19 als Sicherungselement 15 für die Einschuböffnung 13 angebracht.

Der Austauschkorb 10 wird dann zusammen mit den darin befindlichen USV-Batterien 90 mit Hilfe des Krans 50 über die Plattformöffnung 92 positioniert und mit dem Seilzug 40 bis zur Eingangsebene der Windenergieanlage abgelassen. Dort werden die soeben entnommenen USV-Batterien 90 gegen neue USV-Batterien 90 ausgetauscht. Auf der Eingangsebene der Windenergieanlage stellt dies keine besondere Herausforderung dar, da hierzu ggf. benötigte Hilfsmittel ohne weiteres an der Eingangsebene der Windenergieanlage bereitgestellt werden können.

Die neuen USV-Batterien 90 werden mit dem Seilzug 40 zunächst auf die Austauschebene verfahren, bevor der Austauschkorb 10 wie zuvor an der Aufnahme der USV-Batterien 90 im Schaltschrank 91 fixiert wird. Anschließend können die neuen USV-Batterien 90 barrierefrei in die Aufnahme geschoben und der Austauschkorb 10 kann entfernt werden.

Wie aus den vorstehenden Ausführungen unmittelbar ersichtlich, kann die erfindungsgemäße Vorrichtung 1 losgelöst von einer einzelnen Windenergieanlage ausgestaltet sein und somit bei der Wartung beliebiger Windenergieanlagen - insbesondere beim Austausch von USV-Batterien 90 - eingesetzt werden.

## Patentansprüche

1. Vorrichtung (1) zum Austausch von austauschbaren Komponenten einer Windenergieanlage umfassend:
- einen Aufnahmekorb (10) zur Aufnahme wenigstens einer austauschbaren Komponente mit einem ebenen Boden (11) und einer umlaufenden Seitenwand (12), wobei in der Seitenwand (12) eine Einschuböffnung (13) vorgesehen ist, durch die eine austauschbaren Komponente barrierefrei in horizontaler Richtung auf den Boden (11) des Aufnahmekorbs (10) oder von dem Boden (11) des Aufnahmekorbs (10) weggeschoben werden kann;
- eine an dem Aufnahmekorb (10) angeordnete Befestigungsvorrichtung (20) für die seitliche Befestigung des Aufnahmekorbes (10) zur wahlweisen Fixierung der Lage der Einschuböffnung (13) des Aufnahmekorbs (10) gegenüber einer Komponentenaufnahme der Windenergieanlage; und
- eine Aufhängung (30) zum Aufhängen des Aufnahmekorbs (10).

2. Vorrichtung nach Anspruch 1,
**dadurch gekennzeichnet, dass**
die Befestigungsvorrichtung (20) eine Öffnung (22) zur Durchführung eines Befestigungselements (23) und/oder ein Befestigungselement (23) umfasst, wobei das Befestigungselement (23) vorzugsweise verliersicher an der Befestigungsvorrichtung (20) angeordnet und/oder als Teil eines Schnellverschlusses ausgebildet ist.

3. Vorrichtung nach einem der vorhergehenden Ansprüche,
**dadurch gekennzeichnet, dass**
die Befestigungsvorrichtung (20) einen Vorsprung (21) zum Einhaken an der Komponentenaufnahme umfasst.

4. Vorrichtung nach einem der vorhergehenden Ansprüche,
**dadurch gekennzeichnet, dass**
ein Sicherungselement (15) zum wahlweisen Sichern von im Aufnahmekorb (10) befindlichen austauschbaren Komponenten gegen ein Herausrutschen aus der Einschuböffnung (13) vorgesehen ist.

5. Vorrichtung nach Anspruch 4,
**dadurch gekennzeichnet, dass**
das Sicherungselement (15) als sich wahlweise über die Einschuböffnung (13) erstreckende Absperrkette (14), als, vorzugsweise um eine parallel zum Boden (11) des Aufnahmekorbs (10) verlaufende Achse (18) verschwenkbare Absperrklappe (19) oder als in eine geeignete Halterung einschiebbares Sicherungsblech ausgebildet ist.

6. Vorrichtung nach einem der vorhergehenden Ansprüche,
**dadurch gekennzeichnet, dass**
der Aufnahmekorb (10) zur Aufnahme von wenigstens zwei, vorzugsweise von drei austauschbaren Komponenten ausgebildet ist, wobei der Boden (11) des Aufnahmekorbs (10) durch Trennwände (16) in eine der Anzahl der aufzunehmenden austauschbaren Komponenten entsprechende Anzahl einseitig offene Abteile (17) unterteilt ist, und wobei die Grundfläche jedes Abteils (17) vorzugsweise um weniger als 10%, vorzugsweise um weniger als 5% größer ist als die Grundfläche der aufzunehmenden austauschbaren Komponente.

7. Vorrichtung nach einem der vorhergehenden Ansprüche, weiter umfassend:
- einen Ketten- oder Seilzug (40), der an dem einen Ende mit der Aufhängung (30) zum Aufhängen des Aufnahmekorbs (10) verbindbar ist und an seinem anderen Ende in der Windenergieanlage befestigbar ist, wobei die Länge des Ketten- oder Seilzuges (40) vorzugsweise zum Ablassen des Aufnahmekorbs (10) von der Gondel der Windenergieanlage zur Eingangsebene der Windenergieanlage ausreichend ist.

8. Vorrichtung nach einem der vorhergehenden Ansprüche, weiter umfassend:
- einen in der Windenergieanlage anordenbaren Kran (50), an dem die Aufhängung (30) zum Aufhängen des Aufnahmekorbs (10) und/oder der Ketten- oder Seilzug (40) befestigbar ist, wobei der Kran (50) vorzugsweise schwenkbar ist und/oder eine Seillänge aufweist, die zum Ablassen des Aufnahmekorbs (10) von der Austauschebene der Windenergieanlage zur Eingangsebene der Windenergieanlage ausreichend ist.

9. Vorrichtung nach einem der vorhergehenden Ansprüche,
**dadurch gekennzeichnet, dass**
die Vorrichtung (1) zusammenlegbar ist.

10. Vorrichtung nach einem der vorhergehenden Ansprüche,
**dadurch gekennzeichnet, dass**
die austauschbare Komponente eine Batterie (90) für die unterbrechungsfreie Stromversorgung ist.

11. Verfahren zum Austausch von austauschbaren Komponenten einer Windenergieanlage mit einer Vorrichtung gemäß einem der vorhergehenden Ansprüche, umfassend die Schritte:
a) Heranbewegen des Aufnahmekorbs (10) zur Aufnahme wenigstens einer austauschbaren Komponente an eine Komponentenaufnahme der Windenergieanlage;
b) Fixieren der Lage der Einschuböffnung des Aufnahmekorbs (10) gegenüber der Komponentenaufnahme mit der Befestigungsvorrichtung (20);
c) Barrierefreies Schieben wenigstens einer austauschbaren Komponenten aus der Komponentenaufnahme auf den Aufnahmekorb (10) und/oder von dem Aufnahmekorb (10) in die Komponentenaufnahme;
d) Lösen der Befestigungsvorrichtung (20); und
e) Wegbewegen des Aufnahmekorbs (10) von der Komponentenaufnahme.

12. Verfahren nach Anspruch 11,
**dadurch gekennzeichnet, dass**
vor Schritt (a) der Aufnahmekorb (10) von der Eingangsebene der Windenergieanlage heraufgezogen und/oder nach Schritt (e) zur Eingangsebene der Windenergieanlage herabgelassen wird.

13. Verfahren nach Anspruch 11 oder 12,
**dadurch gekennzeichnet, dass**
die austauschbare Komponente eine Batterie (90) für die unterbrechungsfreie Stromversorgung ist.
